# EUROPÄISCHE PATENTSCHRIFT

(11) **EP 0 731 732 B1**
(45) Veröffentlichungstag und Bekanntmachung des Hinweises auf die Patenterteilung: **05.12.2001**
(21) Anmeldenummer: 95932718.0
(22) Anmeldetag: 12.09.1995
(51) Int. Cl.: B01L 7/00, C12Q 1/68, B01L 3/00

(54) **MINIATURISIERTER FLUSS-THERMOCYCLER**
MINIATURIZED FLOW THERMOCYCLER
THERMOCYCLEUR DE FLUX MINIATURISE

(30) Priorität: 30.09.1994 DE 4435107
(43) Veröffentlichungstag der Anmeldung: 18.09.1996
(60) Teilanmeldung: 00108592.7
(73) Patentinhaber: BIOMETRA BIOMEDIZINISCHE ANALYTIK GMBH, 37079 Göttingen (DE)
(72) Erfinder: BAIER, Volker, D-07745 Jena (DE); BODNER, Ulrich, D-37139 Adelebsen (DE); DILLNER, Ulrich, D-07743 Jena (DE); KÖHLER, Johann, Michael, D-07751 Golmsdorf (DE); POSER, Siegfried, D-07749 Jena (DE); SCHIMKAT, Dieter, D-37083 Göttingen (DE)
(74) Vertreter: Ruttensperger, Bernhard, Dipl.-Phys.
(86) Internationale Anmeldenummer: EP9503580
(87) Internationale Veröffentlichungsnummer: WO9610456

(56) Entgegenhaltungen:
- WO-A-91/16966
- WO-A-92/13967
- WO-A-93/22058
- WO-A-94/05414
- FR-A- 2 650 657

## Beschreibung

Die Erfindung betrifft einen miniaturisierten Fluß-Thermocycler, der bei thermisch zu kontrollierenden, biochemischen bzw. molekularbiologischen Prozessen, insbesondere beim Verfahren der sogenannten Polymerase-Ketten-Reaktion, bei dem aus einem Gemisch von DNA-Sequenzen bestimmte Sequenzen vervielfacht werden, Anwendung findet.

Bei der Durchführung von thermisch kontrollierten, biochemischen bzw. molekularbiologischen Prozessen sind häufig Prozeßschritte mit unterschiedlicher Temperaturbeaufschlagung erforderlich. Von besonderer Bedeutung sind solche wechselnden Temperaturbeaufschlagungen bei der sogenannten Polymerase-Ketten-Reaktion.
Das Verfahren der Polymerase-Ketten-Reaktion ist in den letzten Jahren zur Vervielfachung bestimmter DNA-Sequenzen entwickelt worden und in seinen Grundsätzen von Darnell, J.; Lodish, H.; Baltimore, D. in "Molekulare Zellbiologie, Walter de Gruyter, Berlin-New York 1994, S. 256/257" ausgeführt. Unter anderem ist bei diesem Verfahren wesentlich, daß Gemische aus DNA-Sequenzen einer definierten Temperaturwechselbehandlung unterworfen werden. Dazu finden stationäre Probenbehandlungsapparaturen Verwendung, bei denen die entsprechenden Proben in Probenkammern eingegeben und periodisch einem Warm-Kalt-Temperaturzyklus unterworfen werden, wobei sich je nach definiert vorgegebenen Primern die jeweils gewünschten DNA-Sequenzen vervielfachen. Die Effektivität bislang bekannter Probenkammern wird dabei als nicht ausreichend angesehen. Aus diesem Grund ist in jüngster Zeit eine miniaturisierte Probenkammer vorgeschlagen worden (Northrup et al, DNA Amplification with Microfabricated reaction chamber, 7th International Conference on Solid State Sensors and Actuators, Proc. Transducers 1993, S. 924-26), die eine vierfach schnellere Vervielfachung gewünschter DNA-Sequenzen gegenüber bekannten Anordnungen ermöglicht. Diese bis zu 50 µl Probenflüssigkeit aufnehmende Probenkammer besteht aus einer strukturierten Siliziumzelle mit einer Längsausdehnung in der Größenordnung von 10 mm, welche in einer Probenangriffsrichtung von einer dünnen Membran abgeschlossen ist, über die die entsprechende Temperaturbeaufschlagung mittels miniaturisierter Heizelemente erfolgt. Auch bei dieser Vorrichtung wird die zu vervielfachende DNA-Sequenz über Mikrokanäle in die Kammer eingebracht, einer Polymerase-Ketten-Reaktion unterworfen und anschließend wieder abgezogen. Trotz der mit dieser Vorrichtung erzielten Vorteile haftet ihr im wesentlichen der Nachteil an, daß auch diese Probenkammer als Ganzes beheizt und gekühlt werden muß, womit sich nur begrenzte Temperaturwechselraten erreichen lassen. Insbesondere bei weiterer Reduzierung der Probengröße fällt dabei die parasitäre Wärmekapazität der Probenkammer und ggf. eines notwendigen Temperierblocks gegenüber der Probenflüssigkeit immer stärker ins Gewicht, so daß die prinzipiell bei kleinen Flüssigkeitsvolumina denkbaren hohen Temperaturwechselraten nicht erreicht werden können, wodurch die Effektivität des Verfahrens relativ gering bleibt. Darüber hinaus ist zwecks Erreichung jeweils konstanter Temperaturregimes für die Probenflüssigkeit ein relativ aufwendiger Steuer- und Regelaufwand erforderlich, wobei die erbrachte Heiz- bzw. Kühlleistung im wesentlichen nicht in der Probenfiüssigkeit, sondern in den sie umgebenden Baugruppen verbraucht wird.
Desweiteren ist aus US-PS 5,270,183 ein im Durchflußprinzip arbeitender Thermocycler bekannt geworden, bei dem die zu amplifizierende Probenflüssigkeit durch eine Rohrleitung geschickt wird, welche nacheinander um mehrere, auf unterschiedlichen Temperaturen gehaltene Zylinder ein oder mehrfach aufgewickelt ist. Grundsätzlich sind mit einer solchen Ausbildung auch relabiv kleine Probenmengen, bis herunter zu ca. 25 µl, amplifizierbar. Eine derartige Vorrichtung ist in ihrer Handhabung jedoch recht unpraktikabel und erfordert eine hohe Kunstfertigkeit vom Gerätehersteller, so daß sie für eine Serienfertigung gänzlich ungeeignet ist.

Aus der WO-A-92/13967 ist eine Vorrichtung zur Amplifikation bestimmter DNA-Sequenzen vermittels der Polymerase-Ketten-Reaktion bekannt. Diese Vorrichtung umfasst einen langgestreckten, kanalartigen Bereich, der von der Flüssigkeit, in welcher die Reaktion auftreten soll, durchströmt wird. Dieser Kanal ist um drei im Wesentlichen zylinderartig ausgebildete Temperiereinrichtungen derart gewunden, dass die entlang des Kanals sich bewegende Flüssigkeit zyklisch Bereiche verschiedener Temperatur durchläuft, so dass die verschiedenen Stufen der Polymerase-Ketten-Reaktion auftreten können.

Die WO-A-91/16966 offenbart eine Mikro-Flussstruktur, welche aus mehreren plattenartigen Elementen zusammengesetzt ist und einen beispielsweise mäanderartig gewundenen Kanal mit mehreren zueinander parallel liegenden Kanalabschnitten aufweist.

Der Erfindung liegt die Aufgabe zugrunde, einen miniaturisierten Thermocycler anzugeben, der thermisch kontrollierte, biochemische bzw. molekularbiologische Prozesse, insbesondere das Verfahren der Polymerase-Ketten-Reaktion, effektiver als nach dem Stand der Technik durchführen läßt, der das Problem parasitärer Wärmekapazitäten umgeht und der sich kostengünstig herstellen läßt.

Erfindungsgemäß wird die Aufgabe durch den im Anspruch 1 angegebenen miniaturisierten Fluss-Thermocycler gelöst. Der Erfindung liegt der Gedanke zugrunde, aus der sogenannten Mikrosystemtechnik bekannte Strukturierungstechnologien anzuwenden, um eine Probenaufnahmekammer zu schaffen, die eine dynamische Probenbehandlung auch sehr kleiner Mengen, z.T. sehr teurer, Materialien, ermöglicht.
Durch die erfindungsgemäße Gestaltung des Probenaufnahmebereiches ist weiterhin gewährleistet, daß die in jeweils vorgesehenen Heiz- und kühlbereichen, im Folgenden genannt Heiz- und Kühlzonen, gerade einer Behandlung unterworfenen Probenteilvolumina einen homogenen Temperaturdurchsatz erfahren, was ebenfalls eine Ausbeuteerhöhung der zu amplifizierenden Substanz bewirkt. Weiterhin wird durch den anordnungsbedingten Wegfall von Heiz- und Kühlprozessen der Wandungsmaterialien und die drastische Minimierung parasitärer Wärmekapazitäten und Wärmeeinflüsse nicht nur ein erheblich geringerer Steuer- und Regelaufwand erforderlich, sondern der Gesamtprozeßdurchlauf erfährt auch eine wesentliche Zeitverkürzung. Dabei braucht jeweils nur soviel Heiz- und Kühlleistung eingespeist zu werden, wie im Probenflüssigkeitsstrom transportiert wird. Darüber hinaus ermöglicht die erfindungsgemäße Thermocyclerausbildung nicht nur eine kontinuierliche Prozeßführung, sondern auch einen seriellen Betrieb, indem unterschiedliche Substanzen nacheinander dem Thermocycler zuführbar sind, ohne daß es zu störenden Vermischungen mit der noch in der Anordnung befindlichen Probe kommen würde, was sich problemlos durch Einbringung eines kleinen Gaspuffervolumens bewerkstelligen läßt. Alle genannten Vorteile gewährleisten ebenso, daß das Verfahren der Polymerase-Ketten-Reaktion automatisiert durchgeführt werden kann. Weiterhin ergibt sich eine leichte Kombinierbarkeit mit anderen Verfahren, wie z.B. der Mikro-Gel-Elektrophorese, Mikro-Kapillar-Chromatografie und anderen Mikro-Trenn- und Charakterisierungsverfahren.

Zur näheren Illustration der Erfindung sollen nachfolgende Ausführungsbeispiele dienen. Es zeigen:
- Fig. 1: eine Draufsicht auf eine erfindungsgemäße Probenkammer, bei der ein Probenflüssigkeitsweg durch mikrostrukturierte Flußwege gebildet ist und
- Fig. 2: einen seitlichen Schnitt durch eine Probenkammer gemäß Fig. 1.

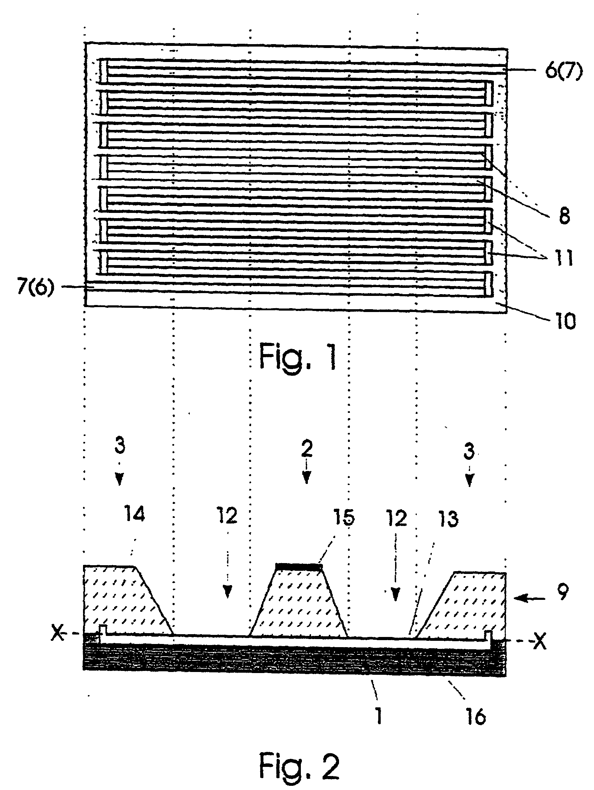

In Figur 1 ist eine erfindungsgemäße Probenkammer, bei der ein Kanal bzw. Probenflüssigkeitsweg durch mikrostrukturierte Flußwege gebildet ist, schematisch dargestellt. Figur 2 zeigt diese Ansbildung nicht maßstäblich im seitlichen Schnitt. Bei dieser Ausführungsform sind in eine ca. 10 · 15 cm² große und 500 µm dicke Platte 10, aus Silizium oder Glas bestehend, jeweilige Kanalabschnitte bereitstellende Gräben 8, die im Beispiel parallel ausgeführt sind, durch naßchemisches Ätzen eingebracht. Ebenso können statt genannter Gräben 8 auch vollständige Durchbrüche vorgesehen sein, wobei der verbleibende Rahmen dann einseitig ganzflächig mit einer geschlossenen Platte zu verschließen wäre. Die offen liegenden Grabenbereiche werden im Beispiel im weiteren von einer Abdeckung 9, die die Baugruppen oberhalb einer Achse X-X, wie in Fig. 4 dargestellt, umfaßt, verschlossen. Die Abdeckung 9 ist dabei in erfindungsgemäßer Weise aus einem Siliziumplättchen gebildet, in das im Beispiel zwei thermisch isolierende Kehlungen 12 eingebracht sind. Diese Kehlungen 12 bilden an ihrer Basis einen membranartigen Abschluß 13, der die Grabenbereiche, die die Verweilzonen der Probenflüssigkeit zwischen Heiz- und Kühlzonen bilden, abdeckt und ca. 1 µm dick ist. In der Figur 2 ist der mittlere Siliziumsteg mit einem Dünnschichtheizelement 15 versehen, mittels dessen die Probenaufheizung an der gegenüberliegenden Stegbasis realisiert wird. Über die im Beispiel verbleibenden zwei äußeren Siliziumstege wird jeweils eine thermostatisierte, nicht näher dargestellte Kühlung vorgenommen. Ein durchgängiger Probenfluß ist im Beispiel durch in die Abdeckung 9 eingebrachte Überbrückungskanäle 11 gewährleistet, die wechselseitig Einzelgrabenanfänge mit den jeweils benachbarten Einzelgrabenenden verbinden. Erforderliche Zu- und Abläufe sind entweder in der Platte 10 (wie in Figur 1 angedeutet) oder die Abdeckung 9 einbringbar. Die beschriebene Gesamtvorrichtung ist im Beispiel mit einem Träger 16 versehen, der aus einem Glas mit niedriger Wärmeleitfähigkeit gefertigt ist. Im Beispiel sind den Einzelgräben 8 Grabenbreiten von 500 µm und Grabenlängen von etwas unter 100 mm bei Grabentiefen von 400 µm gegeben, wodurch sich inclusive der Wege für die Überbrückungskanäle eine Gesamtgrabenlänge von 0,4 m ergibt. Dabei sind sinnvollerweise Probenvolumina von ca. 10 bis 200 µl in den Fluß-Thermocycler einbringbar, was bisher üblichen Probenmengen entspricht. Da durch die angegebenen Grabendimensionierungen die Möglichkeiten der Mikrolithografie bei weitem noch nicht ausgeschöpft sind, sind für gewünschte Anwendungsfälle auch Dimensionierungen bereits heute herstellbar, die die Einbringung eines Probenvolumens in der Größenordnung von 0,1 µl zulassen würden.
Mit dem zu Figur 1 und 2 gehörigen Ausführungsbeispiel sind bei möglichen Flußraten von ca. 0,1 µl/s, bei Probenverweilzeiten in den Heiz- zonenbereichen von ca. 20 sec, in den Kühlzonenbereichen von 30 sec und in den dazwischenliegenden Zonen von 10 sec, bei einer Einzelgrabenanzahl von 40, Gesamtdurchlaufzeiten zur Amplifizierung mit maximal möglicher Ausbeute von 40 min erreichbar, was eine deutliche Reduzierung unter die bisher bekannt gewordenen geringsten Zeiten bei gleichzeitig erhöhter Ausbeute bedeutet.
In diesem Beispiel kann die Heizzone im Rahmen der Erfindung so ausgebildet sein, daß sie in zwei Teilbereiche derart aufgeteilt ist, daß in Flußrichtung eine erste Heizzone von bspw. 4 mm Breite entsteht, an die sich eine nicht dargestellte thermische Isolationszone von 1 mm und daran eine zweite Heizzone mit 2 mm Ausdehnung anschließt. Auf diese Weise ist genannte erste Heizzone über Einstellung einer entsprechenden Heizleistung mit einer Temperatur von 72°C und die zweite Heizzone mit einer Temperatur von 92°C beaufschlagbar. An genannte zweite Heizzone könnte eine zweite thermische Isolationszone von bspw. 1 mm Ausdehnung folgen, an die sich eine Kühlzone von bspw. 3 mm Ausdehnung anschließt, die durch sekundäre Kühlung auf 55°C gehalten wird. Ein derart ausgebildeter miniaturisierter Thermocycler ist besonders zur Durchführung einer Polymerase-Kettenreaktion geeignet. Dabei wird am Zulauf ein Gemisch aus Template, Nukleosidtriphosphaten, Primern und taq-Polymerase in Pufferlösung appliziert, deren jeweilige Zusammensetzung analog zum bekannten Stand der Technik festgelegt wird. Die Flußrate wird auf ca. 8 µl/min eingestellt, so daß die Verweilzeit je Periode etwa 1 Minute beträgt. Davon entfallen auf genannte erste Heizzone 20 sec, 10 sec auf die zweite Heizzone, 15 sec auf die Kühlzone und jeweils 5 sec auf die thermischen Isolationszonen. Zum Durchlauf des gesamten miniaturisierten Thermocyclers werden damit ca. 40 Minuten benötigt. In dieser Zeit finden in einem Volumenelement von 2 µl vierzig Amplifikationszyklen statt. Bei einer Verlängerung auf 44 Minuten (10% Zeitverlängerung) werden 34 µl amplifiziert.

Die erfindungsgemäße Probenkammer läßt sich problemlos einer Serienfertigung zuführen und ist kostengünstig, bei gleichzeitg großer Vielfalt unterschiedlicher Probenkammergeometrien herstellbar, so daß eine Anpassung für variierende Anwendungsfälle keine weiteren Schwierigkeiten mit sich bringt.

### Bezugszeichenliste

- 1 -: Probenaufnahmebereich
- 2 -: Heizzone
- 3 -: Kühlzone
- 6 -: Zulauf
- 7 -: Ablauf
- 8 -: Graben
- 9 -: Abdeckung
- 10 -: Silizium- oder Glasplättchen
- 11 -: Überbrückungskanäle
- 12 -: isolierende Kehlung
- 13 -: membranartiger Abschluß
- 14 -: Siliziumsteg
- 15 -: Dünnschichtheizelement
- 16 -: Träger
- X-X -: Achse

## Patentansprüche

1. Miniaturisierter Fluss-Thermocycler, umfassend einen zum Durchfluss flüssigen Mediums ausgebildeten Probenaufnahmebereich (1) mit einem Eintrittsbereich (6) und einem Austrittsbereich (7) für das flüssige Medium, wobei der Probenaufnahmebereich einen in einer Platte (10) gebildeten, durch eine Abdeckung (9) abgedeckten Kanal umfasst, welcher zwischen dem Eintrittsbereich (6) und dem Austrittsbereich (7) zum Bilden nebeneinander verlaufender Kanalabschnitte mehrfach mäanderartig gewunden ist, sowie eine Mehrzahl von Temperierbereichen, mit welchen das flüssige Medium in Wärmeübertragungs-Wechselwirkung tritt, umfassend an der Abdeckung (9) wenigstens einen Heizbereich und wenigstens einen von diesem durch eine in der Abdeckung (9) gebildete Kehlung (12) thermisch isolierten Kühlbereich, wobei vergleichbare Kanalabschnittsbereiche von dem wenigstens einen Heizbereich und dem wenigstens einen Kühlbereich derart erfasst sind, dass entlang des Kanals sich bewegendes flüssiges Medium alternierend von dem wenigstens einen Heizbereich und dem wenigstens einen Kühlbereich erfasste Kanalabschnittsbereiche durchströmt, und wobei in den Heiz- bzw. Kühlbereichen jeweilige Temperiereinrichtungen zur Erzeugung der erforderlichen Heiz- bzw. Kühltemperaturen vorgesehen sind.

2. Miniaturisierter Fluss-Thermocycler nach Anspruch 1, **dadurch gekennzeichnet, dass** die Kanalabschnitte durch in eine Wandung eingebrachte Gräben gebildet sind, wobei die Wandung durch ein Silizium- bzw. Glasplättchen (10) gebildet ist, in welches die Gräben (8) parallel eingeätzt sind, dass die Gräben (8) an ihren Enden untereinander durch Überbrückungskanäle (11) in eine durchgehende Verbindung gebracht sind und dass der durch die Gräben und die Überbrückungskanäle gebildete Kanal von wenigstens je einem Heizbereich (2) und einem Kühlbereich (3) erfasst ist.

3. Miniaturisierter Fluss-Thermocycler nach Anspruch 2, **dadurch gekennzeichnet, dass** die Überbrückungskanäle (11) in der Abdeckung (9) vorgesehen sind.

4. Miniaturisierter Fluss-Thermocycler nach einem der Ansprüche 1 bis 3, **dadurch gekennzeichnet, dass** die zwischen dem wenigstens einen Heizbereich (2) und dem wenigstens einen Kühlbereich (3) vorgesehene Kehlung (12) an der von dem Kanal abgewandten Seite der Abdeckung (9) ausgebildet ist.

5. Miniaturisierter Fluss-Thermocycler nach einem der Ansprüche 1 bis 4, **dadurch gekennzeichnet, dass** die Kehlung (12) einen membranartigen Abschluss (13) bildet.

6. Miniaturisierter Fluss-Thermocycler nach einem der Ansprüche 1 bis 5, **dadurch gekennzeichnet, dass** die Abdeckung (12) aus einem Silizium-Plättchen gebildet ist.

7. Miniaturisierter Fluss-Thermocycler nach einem der Ansprüche 1 bis 6, **dadurch gekennzeichnet, dass** der wenigstens eine Heizbereich (2) oder/und der wenigstens eine Kühlbereich (3) in Probendurchflussrichtung größenordnungsmäßig jeweils gleichlange Kanalabschnittsbereiche erfassen.

8. Miniaturisierter Fluss-Thermocycler nach einem der Ansprüche 1 bis 7, **dadurch gekennzeichnet, dass** der wenigstens eine Heizbereich 2 oder/und der wenigstens eine Kühlbereich (3) in voneinander beabstandete Bereiche zur Bereitstellung unterschiedlicher Temperaturen aufteilbar ist.

## Claims

1. Miniaturised flow thermocycler, comprising a sampling region (1) designed for the throughflow of a liquid medium, with an inlet region (6) and an outlet region (7) for the liquid medium, the sampling region comprising a duct formed in a plate (10) and covered by a cover (9), which duct is wound in a frequently meandering manner between the inlet region (6) and the outlet region (7) to form duct portions running next to one another, and a plurality of tempering regions, with which the liquid medium enters into thermal transmission interaction, comprising on the cover (9) at least one heating region and at least one cooling region thermally insulated therefrom by a channel (12) formed in the cover (9), wherein comparable duct portion regions are comprised of the at least one heating region and the at least one cooling region, in such a way that liquid medium moving along the duct flows through duct portion regions comprised alternately of the at least one heating region and the at least one cooling region, and wherein respective tempering devices to produce the required heating or cooling temperatures are provided in the heating or cooling regions.

2. Miniaturised flow thermocycler according to claim 1, **characterised in that** the duct portions are formed by troughs inserted in a wall, the wall being formed by a silicon or glass plate (10) into which the troughs (8) are etched in a parallel manner, **in that** the troughs (8) at the ends thereof are brought into continuous connection with one another by bridging ducts (11) and **in that** the duct formed by the troughs and the bridging ducts are comprised of at least a heating region (2) and a cooling region (3) respectively.

3. Miniaturised flow thermocycler according to claim 2, **characterised in that** the bridging ducts (11) are provided in the cover (9).

4. Miniaturised flow thermocycler according to any one of claims 1 to 3, **characterised in that** the channel (12) provided between the at least one heating region (2) and the at least one cooling region (3) is formed on the side of the cover (9) remote from the duct.

5. Miniaturised flow thermocycler according to any one of claims 1 to 4, **characterised in that** the channel (12) forms a diaphragm-like closure (13).

6. Miniaturised flow thermocycler according to any one of claims 1 to 5, **characterised in that** the cover (12) is formed from a silicon plate.

7. Miniaturised flow thermocycler according to any one of claims 1 to 6, **characterised in that** the at least one heating region (2) and/or the at least one cooling region (3) in sample throughflow direction each comprises, in size terms, equally long duct portion regions.

8. Miniaturised flow thermocycler according to any one of claims 1 to 7, **characterised in that** the at least one heating region (2) and/or the at least one cooling region (3) can be divided into regions spaced apart from one another to provide different temperatures.

## Revendications

1. Cycleur thermique miniaturisé de flux, comprenant une zone de réception d'échantillon (1) conçu pour le passage d'agent liquide avec une zone d'entrée (6) et une zone de sortie (7) pour l'agent liquide, la zone de réception d'échantillon comprenant un canal formé dans une plaque (10) et masqué par un recouvrement (9), qui se déroule en formant plusieurs méandres entre la zone d'entrée (6) et la zone de sortie (7) pour former des parties de canal agencées les unes à côté des autres, et une pluralité de plages de régulation de température, avec lesquelles l'agent liquide entre en interaction de transfert de chaleur, comprenant sur le recouvrement (9) au moins une zone de chauffage et au moins une zone de refroidissement thermiquement isolée de celle-ci par une gorge (12) formée dans le recouvrement (9), des zones de partie de canal comparables étant prises en compte par la au moins une zone de chauffage et la au moins une zone de refroidissement de telle façon que l'agent liquide se déplaçant le long du canal parcoure des zones de partie de canal prises en compte alternativement par la au moins une zone de chauffage et la au moins une zone de refroidissement, et moyennant quoi des systèmes de régulation de température respectifs sont prévus dans les zones de chauffage et de refroidissement pour la production des températures nécessaires de chauffage et de refroidissement.

2. Cycleur thermique miniaturisé de flux selon . la revendication 1, **caractérisé en ce que** les parties de canal sont formées par des tranchées introduites dans une paroi, la paroi étant formée par une plaquette de silicium ou de verre (10), dans laquelle les tranchées (8) sont gravées de façon parallèle, **en ce que** les tranchées (8) sont amenées dans une liaison continue sur leurs extrémités les unes au-dessous des autres par des canaux de pontage (11) et **en ce que** le canal formé par les tranchées et les canaux de pontage sont pris en compte chacun par au moins une zone de chauffage (2) et une zone de refroidissement (3).

3. Cycleur thermique miniaturisé de flux selon la revendication 2, **caractérisé en ce que** les canaux de pontage (11) sont prévus dans le recouvrement (9).

4. Cycleur thermique miniaturisé de flux selon l'une quelconque des revendications 1 à 3, **caractérisé en ce que** la gorge (12) prévue entre la au moins une zone de chauffage (2) et la au moins une zone de refroidissement (3) est formée sur le côté du recouvrement (9) qui est opposé au canal.

5. Cycleur thermique miniaturisé de flux selon l'une quelconque des revendications 1 à 4, **caractérisé en ce que** la gorge (12) présente une terminaison (13) de type membrane.

6. Cycleur thermique miniaturisé de flux selon l'une quelconque des revendications 1 à 5, **caractérisé en ce que** le recouvrement (12) est formé d'une plaquette de silicium.

7. Cycleur thermique miniaturisé de flux selon l'une quelconque des revendications 1 à 6, **caractérisé en ce que** la au moins une zone de chauffage (2) et/ou la au moins une zone de refroidissement (3) tient (tiennent) compte des zones de partie de canal respectivement de même longueur au niveau de leurs dimensions dans le sens d'écoulement de l'échantillon.

8. Cycleur thermique miniaturisé de flux selon l'une quelconque des revendications 1 à 7, **caractérisé en ce que** la au moins une zone de chauffage (2) et/ou la au moins une zone de refroidissement (3) peut (peuvent) être subdivisée(s) en zones espacées les unes des autres pour mettre à disposition différentes températures.
